# EUROPÄISCHE PATENTSCHRIFT

(11) **EP 0 921 322 B1**
(45) Veröffentlichungstag und Bekanntmachung des Hinweises auf die Patenterteilung: **15.09.2004**
(21) Anmeldenummer: 98119361.8
(22) Anmeldetag: 14.10.1998
(51) Int. Cl.: F15B 13/042, G05D 16/20

(54) **Pneumatisches Steuerventil**
Pneumatic control valve
Soupape de réglage pneumatique

(30) Priorität: 06.12.1997 DE 19754219
(43) Veröffentlichungstag der Anmeldung: 09.06.1999
(73) Patentinhaber: ROBERT BOSCH GMBH, 70442 Stuttgart (DE)
(72) Erfinder: Gödert, Heinz, 71642 Ludwigsburg (DE)
(74) Vertreter: Maiwald Patentanwalts GmbH

(56) Entgegenhaltungen:
- EP-A- 0 764 803
- EP-A- 0 790 412
- DE-A- 2 727 185
- DE-A- 4 201 442

## Beschreibung

### Stand der Technik

Die Erfindung geht aus von einem pneumatischen Steuerventil nach der im Oberbegriff des Hauptanspruchs näher angegebenen Gattung.

Es ist schon ein solches pneumatisches Steuerventil aus der EP 0 764 803 A1 bekannt, das sich für mehrere Anwendungsfälle eignet und als Druckregelventil, als 3/3-Proportional-Wegeventil oder als Schaltventil verwendbar ist. Das als Sitzventil ausgebildete Steuerventil weist zu diesem Zweck zwei federbelastete Ventilkörper auf, die so ausgebildet und angeordnet sind, daß sie im wesentlichen druckkompensiert sind hinsichtlich eines Primärdruckes in einem Zulaufanschluß, hinsichtlich eines Sekundärdruckes in einem Motoranschluß und hinsichtlich des Umgebungsdruckes in einem Entlüftungsanschluß. Jeder Ventilkörper des Steuerventils arbeitet dabei mit einer ringförmigen Dichtkante sowie mit einer dynamischen Dichtung in Form eines Dichtringes und kann von einem Betätigungsstößel aus mit Hilfe eines Doppelhubmagneten betätigt werden. Der Betätigungsstößel durchdringt hierbei alle drei den verschiedenen Anschlüssen zugeordneten Ventilkammern, wobei auf ihm die federbelasteten Ventilkörper axial gleitend angeordnet sind. Nachteilig bei dieser Bauart ist nun, daß der Betätigungsstößel an seinen beiden aus den Ventilkörpern hinausragenden Endabschnitten jeweils ventilgehäuseseitig festgelegte Membranen trägt, die eine gasdichte Ausgleichswand zur Begrenzung von Ausgleichskammern bildet; diese Bauart macht den Druckausgleich ausschließlich über die Membranen. Ferner hat der näher zum Magnetantrieb liegende Ventilkörper eine Differenzfläche, so daß auf ihn zumindest eine vom Sekundärdruck herrührende, die Federkraft unterstützende, schließende Differenzkraft wirkt. Obwohl bei diesem Steuerventil eine weitgehende Druckkompensation erreichbar ist, baut dieses Steuerventil mit Hilfe der Ausgleichswände aus Membranen äußerst aufwendig und teuer. Hinzu kommt, daß beide Ventilkörper mit hülsenförmigen Führungsabschnitten auf dem Betätigungsstößel gelagert sind und zugleich an ihrem Außenumfang im gehäusefesten Deckel dicht geführt sind. Dabei muß bei dieser Anordnung zusätzlich die Abdichtfläche des Ventilkörpers noch plan auf einer gehäuseseitigen, ringförmigen Dichtkante aufliegen können, um eine einwandfreie Abdichtung zu gewährleisten. Diese Bauweise mit Mehrfachführung und Ventilsitz erfordert einen besonders hohen Fertigungsaufwand und geringe Toleranzen, zumal der Ventilkörper selbst in einem Deckelteil geführt ist, das seinerseits erst im Gehäuse eingesetzt ist. Weiterhin ist es ungünstig, daß die Federn in den Kammern auf der Anschlußseite liegen, wo verhältnismäßig wenig Bauraum zur Verfügung steht. Fernerhin wird der Sekundärdruck über gehäuseseitige Zweigkanäle in die Ausgleichskammern geführt, was für eine kompakte Bauweise ungünstig ist. Ferner kann es in manchen Fällen von Nachteil sein, wenn die ringförmige Dichtkante für die Sitzventilfunktion des Ventilkörpers unmittelbar am Gehäuse angeordnet ist. Auch ist es ungünstig, wenn der den Ventilkörper am Umfang abdichtende Dichtring im Ventilkörper selbst angeordnet ist, und dadurch die Größe des effektiven wirksamen Durchmessers beeinflußt.

Ferner ist aus der DE 42 01 442 A1 ein 3-Wege-Druckregelventil im Zusammenhang mit einem elektrofluidischen Sensor und einem Druckregelkreis bekannt, das ebenfalls als druckkompensiertes Sitzventil ausgeführt ist. Hierbei sind auf einem im Gehäuse axial beweglich gelagerten Betätigungsstößel zwei federbelastete, hülsenförmige Ventilkörper angeordnet, die mit gehäusefesten, ringförmigen Dichtkanten zusammenarbeiten. Um hier eine gute Druckkompensation zu erreichen, sind drei Faltenbälge erforderlich, die zwischen den beiden Ventilkörpern bzw. zwischen jedem Ventilkörper und einer gehäuseseitigen Wand angeordnet sind. Ein derartiges Druckregelventil mit Faltenbälgen zur Druckkompensation führt zu einem sehr hohen Bauaufwand und ist entsprechend teuer. Ferner führen die Faltenbälge in axialer Richtung zu einer langen Bauweise des Ventils. Eine derartige Bauweise des Steuerventils bedingt eine sehr präzise Fertigung mit hohen Anforderungen insbesondere an die Koaxialitätstoleranzen von Gehäuse und Einbauteilen sowie an die Planlauftoleranzen der Sitzelemente.

### Vorteile der Erfindung

Das erfindungsgemäße pneumatische Steuerventil mit den kennzeichnenden Merkmalen des Hauptanspruchs hat demgegenüber den Vorteil, daß es eine vollständige Druckkompensation bei einfacher und kompakter Bauweise ermöglicht. Gasdichte Ausgleichswände mit Hilfe von Membranen können dabei entfallen. Das Steuerventil baut kostengünstiger und ermöglicht eine sichere Arbeitsweise auch bei rauhem Betrieb. Der vollständige primär- und sekundärseitige Ausgleich der Druckkräfte ermöglicht eine von dem Druckregelbereich und der Nenngröße weitgehend unabhängige Ansteuerleistung; es sind im wesentlichen nur noch Reibkräfte, Strömungskräfte und Massenkräfte zu überwinden, so daß die Ansteuerleistung gering ist. Die Ausbildung des Steuerventils mit zwei als Sitzventilen ausgebildeten Ventilkörpern ermöglicht einen leckagefreien Aufbau und erfordert keine speziell aufbereitete Druckluft. Das Steuerventil ist vielseitig einsetzbar; durch seine symmetrische Gestaltung der beiden Ventilkörper sind der Primäranschluß und der Entlüftungsanschluß vertauschbar. Auch läßt sich bei Verwendung eines elektromechanischen Wandlers, zum Beispiel eines Doppelhubmagneten, der sowohl Zug- als auch Druckkräfte erzeugen kann, eine Ausführung mit einem fail-safe-Verhalten realisieren, wobei der Druck am Motor auf dem eingestellten Wert bleibt, also nicht entlüftet wird, so daß der Sekundärdruck bei Spannungsausfall erhalten bleibt; auch läßt sich ein unterschiedliches fail-safe-Verhalten erzielen, wobei der Arbeitsanschluß gegen Atmosphäre entlüftet ist.

Durch die in den Unteransprüchen aufgeführten Maßnahmen sind vorteilhafte Weiterbildungen und Verbesserungen des im Hauptanspruch angegebenen pneumatischen Steuerventils möglich. So läßt sich bei einer Ausbildung nach Anspruch 2 ein besonders exakter Druckausgleich am Ventilkörper erreichen, da der effektive Durchmesser für die Ringdichtung einerseits und andererseits für die ringförmige Dichtkante genau gleich groß gehalten werden kann. Besonders einfach und kostengünstig läßt sich dies bei einer Bauweise nach den Ansprüchen 3 und 4 erreichen. Eine besonders kompakte und zweckmäßige Bauweise des Steuerventils ergibt sich, wenn die Ventilkörper gemäß Anspruch 5 becherförmig ausgeführt werden. Ferner ist es vorteilhaft, wenn gemäß Anspruch 6 der Betätigungsstößel in einfacher und kostengünstiger Bauweise gelagert wird. Dabei lassen sich die erforderlichen Herstellungstoleranzen niedrig halten, so daß insgesamt eine kostengünstige und kompakte Bauweise erzielbar ist. Zweckmäßig ist es ferner, wenn gemäß Anspruch 7 die Federn in den Ausgleichskammern angeordnet werden, was eine raumsparende Bauweise begünstigt und die Federn von einem von Arbeitsdruckmittel durchströmten Raum herausnimmt. Außerdem ist es vorteilhaft, wenn die Ausgleichskanäle vom Sekundärdruckanschluß zu den Ausgleichskammern gemäß Anspruch 8 über den Betätigungsstößel geführt werden, so daß keine zusätzlichen Kanäle im Gehäuse erforderlich sind. Dabei können die Ausgleichskanäle sowohl außen am Betätigungsstößel wie auch innen im Betätigungsstößel angeordnet werden. Günstig für eine einfache und kompakte Bauweise des Steuerventils ist ferner, wenn gemäß Anspruch 9 das Gehäuse ausgeführt wird und in seinem Inneren die Ventilkörper führt. Weitere vorteilhafte Ausgestaltungen ergeben sich aus den übrigen Ansprüchen, der Beschreibung sowie der Zeichnung. Dabei ist es besonders günstig, wenn das Steuerventil gemäß Anspruch 15 für ein elektronisch geregeltes 3-Wege-Druckregelventil verwendet wird, wodurch eine schnelle und genaue Arbeitsweise erzielbar ist.

### Zeichnung

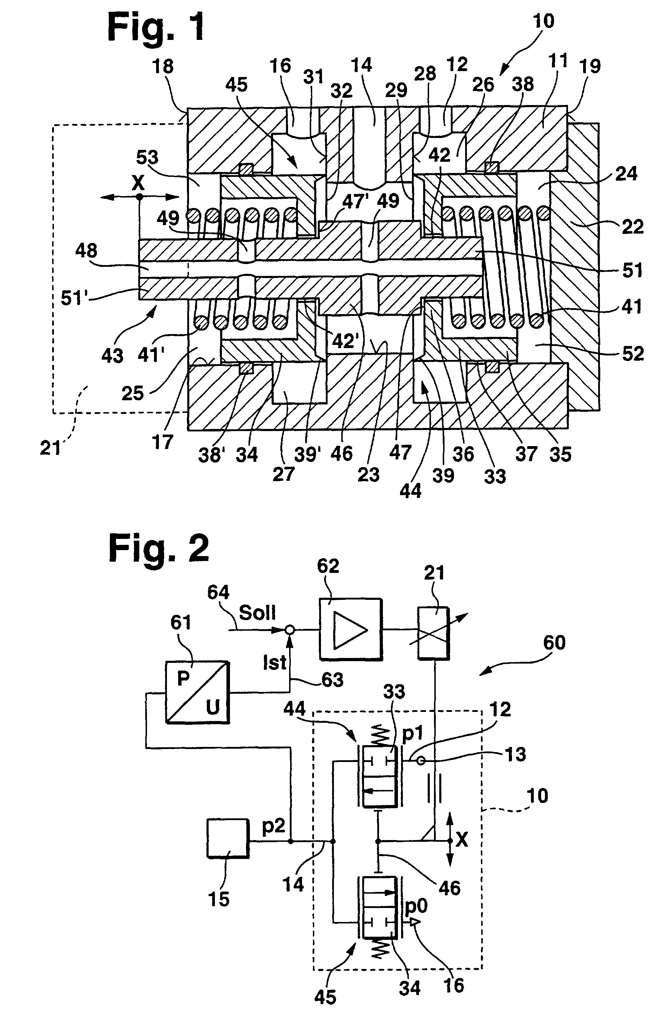

Ein Ausführungsbeispiel der Erfindung ist in der Zeichnung dargestellt und in der nachfolgenden Beschreibung näher erläutert. Es zeigen Figur 1 einen Längsschnitt durch das pneumatische Steuerventil in vereinfachter Darstellung und Figur 2 den schematischen Aufbau eines elektropneumatischen Druckreglers mit dem Steuerelement nach Figur 1.

### Beschreibung des Ausführungsbeispiels

Die Figur 1 zeigt in vereinfachter Darstellung einen Längsschnitt durch ein pneumatisches Steuerventil 10, das ein Gehäuse 11 aufweist. In dem Gehäuse 11 ist ein Zulaufanschluß 12 zur Druckmittelzufuhr vorgesehen, der von einer Druckmittelquelle 13 mit einem Primärdruck versorgt wird. Ferner weist das Gehäuse 11 einen Motoranschluß 14 - der auch als Verbraucheranschluß, Arbeitsanschluß oder Sekundärdruckanschluß betrachtet werden kann - auf, der mit einem Verbraucher 15 in Verbindung steht, um diesen mit einem Sekundärdruck zu versorgen. Ferner ist im Gehäuse ein Entlüftungsanschluß 16 angeordnet, über den Druckmittel vom Motoranschluß 14 in die Umgebung entlastet werden kann.

Das Gehäuse 11 weist eine durchgehende Längsbohrung 17 auf, welche die beiden Stirnseiten 18, 19 des Gehäuses 11 miteinander verbindet. Die Öffnung der Längsbohrung 17 in der Stirnseite 18 ist durch eine elektromagnetische Betätigungseinrichtung 21 verschlossen, die als an sich bekannter Doppelhubmagnet oder Proportionalmagnet ausgebildet werden kann. An der anderen Stirnseite 19 ist die Längsbohrung 17 durch einen Gehäusedeckel 22 verschlossen.

Im Gehäuse 11 ist die durchgehende Längsbohrung 17 durch einen mittleren Bohrungsabschnitt 23 mit kleinerem Durchmesser in zwei sacklochartige Führungsbohrungen 24, 25 geteilt. Am inneren Ende jeder Führungsbohrung 24, 25 ist jeweils durch eine ringförmige Erweiterung eine erste Kammer 26 bzw. zweite Kammer 27 ausgebildet. Die erste Kammer 26 steht mit dem Zulaufanschluß 12 in Verbindung und bildet eine ebene, erste Sitzfläche 28, in der am Übergang zum mittleren Bohrungsabschnitt 23 eine Zuströmöffnung 29 ausgebildet ist. In entsprechender Weise weist die zweite Kammer 27 eine ebene, gehäusefeste, zweite Sitzfläche 31 auf, in der am Übergang zum mittleren Bohrungsabschnitt 23 eine Abströmöffnung 32 ausgebildet ist. Der mittlere Bohrungsabschnitt 23 steht mit dem Motoranschluß 14 in Verbindung.

In den beiden Führungsbohrungen 24, 25 ist jeweils ein Ventilkörper angeordnet, von denen der erste Ventilkörper 33 zwischen den Zulaufanschluß 12 und den Motoranschluß 14 geschaltet ist, während der zweite Ventilkörper 34 in der Führungsbohrung 25 die Verbindung zwischen dem Motoranschluß 14 und dem Entlüftungsanschluß 16 steuert. Beide Ventilkörper weisen identische Abmessungen auf und bilden Teile von Sitzventilen, weshalb im folgenden nur der Ventilkörper 33 näher beschrieben wird.

Der Ventilkörper 33 weist im wesentlichen einen becherförmigen Querschnitt auf, wobei ein hülsenförmiger Führungsabschnitt 35 in einen Boden 36 übergeht. Der Führungsabschnitt 35 ist mit seiner äußeren Mantelfläche 37 unmittelbar in der Führungsbohrung 24 axial beweglich geführt, wobei ein im Gehäuse 11 sitzender Dichtring 38 an der Mantelfläche 37 anliegt und für eine sichere Abdichtung sorgt. Die äußere Mantelfläche 37 am Führungsabschnitt 35 läuft im Bereich des Bodens 36 in einer ringförmigen Dichtkante 39 aus, welche mit der gehäusefesten, ersten Sitzfläche 28 zusammenarbeitet, um ein erstes Sitzventil 44 zu bilden. Durch diese Bauweise, bei der die Dichtkante 39 und die Mantelfläche 37 auf demselben Durchmesser liegen, ist der erste Ventilkörper 33 gegenüber dem Primärdruck im Zulaufanschluß 12 druckkompensiert ausgebildet. Der erste Ventilkörper 33 wird von einer Feder 41 mit seiner Dichtkante 39 gegen die erste Sitzfläche 28 gedrückt, wobei sich die Feder 41 an seinem Boden 36 bzw. am Deckel 22 abstützt. Die in der ersten Führungsbohrung 24 angeordnete Feder 41 ragt somit in das Innere des becherförmigen Ventilkörpers 33 hinein. Zentrisch im Boden 36 des Ventilkörpers 33 liegt eine Bohrung 42, in welcher ein bolzenförmiger Betätigungsstößel 43 mit Spiel gleitend gelagert ist, so daß die beiden Teile relativ zueinander beweglich sind. Der erste Ventilkörper 33 bildet mit der ersten Sitzfläche 28 somit das erste Sitzventil 44, welches die Verbindung vom Zulaufanschluß 12 über die Zuströmöffnung 29 zum Motoranschluß 14 steuert.

Am zweiten Ventilkörper 34, der identisch ausgebildet ist, sind gleiche Teile wie beim ersten Ventilkörper 33 mit gleichen Bezugszeichen und mit Apostroph bezeichnet. Der zweite Ventilkörper 34 ist gegenüber dem Druck im Entlüftungsanschluß 16 druckausgeglichen ausgebildet. Ferner steuert der zweite Ventilkörper 34 mit seiner ringförmigen Dichtkante 39' die Verbindung vom Motoranschluß 14 über die Abströmöffnung 32 zum Entlüftungsanschluß 16. Der zweite Ventilkörper 34 bildet mit der zweiten Sitzfläche 31 das zweite Sitzventil 45. Die den zweiten Ventilkörper 34 belastende Feder 41' stützt sich an der elektromagnetischen Betätigungseinrichtung 21 ab. Die beiden Sitzventile 44, 45 sind im Gehäuse 11 so ausgebildet, daß die Wirkrichtungen der von den beiden Federn 41, 41' ausgeübten Druckkräfte zueinander entgegengesetzt gerichtet sind.

In dem Gehäuse 11 ist koaxial zu den beiden Ventilkörpern 33, 34 der Betätigungsstößel 43 angeordnet. Dieser Betätigungsstößel 43, der mit seinen rohrförmigen Endabschnitten 51, 51' in den Bohrungen 42, 42' gelagert und geführt ist, weist im Bereich des mittleren Bohrungsabschnitts 23 einen Kolbenabschnitt 46 mit vergrößertem Durchmesser auf. Dieser Kolbenabschnitt 46 weist an seinen beiden Stirnseiten Betätigungsflächen 47 auf, die jeweils einem der Ventilkörper 33 bzw. 34 zugeordnet sind. Im Inneren des Betätigungsstößels 43 sind Längskanäle 48 und Querkanäle 49 angeordnet, so daß der im Motoranschluß 14 herrschende Sekundärdruck auch in die erste Führungsbohrung 24 sowie in die zweite Führungsbohrung 25 übertragen wird. Der Betätigungsstößel 43 ist mit seinem Kolbenabschnitt 46 so ausgeführt, daß bei nicht betätigter Betätigungseinrichtung 21 beide Ventilkörper 33, 34 von ihren Federn 41, 41' jeweils auf ihre Sitzflächen 28 bzw. 31 gedrückt werden, so daß beide Sitzventile 44, 45 sicher geschlossen sind.

Wie die Figur 1 ferner zeigt, ragt der Betätigungsstößel 43 mit seinen durch die Bohrungen 42, 42' hindurchragenden Endabschnitten 51 bzw. 51' in Ausgleichskammern 52 bzw. 53 hinein, in denen auch die Federn 41, 41' aufgenommen sind und von denen jede Ausgleichskammer durch den dynamisch wirkenden Dichtring 38, 38' von dem zugeordneten Anschluß 12 bzw. 16 getrennt ist. Die somit frei in die Ausgleichskammern 52, 53 ragenden Endabschnitte 51, 51' sind an ihren Stirnseiten ebenfalls vom Sekundärdruck beaufschlagt, so daß auch der Betätigungsstößel 43 insgesamt druckausgeglichen ist. Der Betätigungsstößel 43, der nur in den beiden Ventilkörpern 33, 34 axial beweglich gelagert ist, bedarf nur einer relativ einfachen Lagerung, die keine präzise Fertigung mit hohen Anforderungen voraussetzt.

Die Wirkungsweise des pneumatischen Steuerventils 10 wird wie folgt erläutert. Bei nicht aktivierter Betätigungseinrichtung 21 liegt der Betätigungsstößel 43 in der gezeichneten Neutralstellung, wobei beide Sitzventile 44, 45 geschlossen sind. Dabei drückt die Feder 41 den ersten Ventilkörper 33 mit seiner ringförmigen Dichtkante 39 gegen die erste Sitzfläche 28 und sperrt die Zuströmöffnung 29. In entsprechender Weise drückt die Feder 41' den zweiten Ventilkörper 34 mit seiner Dichtkante 39' gegen die zweite Sitzfläche 31 und sperrt die Abströmöffnung 32. Durch die geschilderte Ausbildung der beiden Ventilkörper 33, 34 ist der erste Ventilkörper 33 sowohl gegen den Primärdruck im Zulaufanschluß 12 als auch gegen den Sekundärdruck im Motoranschluß 14 und in der ersten Führungsbohrung 24 vollständig druckausgeglichen. Entsprechendes gilt für den zweiten Ventilkörper 34, der gegenüber dem Umgebungsdruck im Entlüftunganschluß 16 einerseits und andererseits gegenüber dem Sekundärdruck im Motoranschluß 14 und in der zweiten Führungsbohrung 25 vollständig druckausgeglichen ist. Die Anordnung der Dichtringe 38, 38' im Gehäuse 11 erlaubt dabei einen besonders exakten Druckausgleich. Die Trennung zweier unterschiedlicher Druckbereiche erfolgt somit an jedem Ventilkörper lediglich durch einen einzigen, dynamisch beanspruchten Dichtring 38, 38' der jeweils an den Mantelflächen 37 anliegt, so daß insgesamt die Reibkräfte niedrig gehalten werden. Der vollständige Druckausgleich an beiden Ventilkörpern 33, 34 ermöglicht eine von dem Druckregelbereich und der Nenngröße weitgehend unabhängige Ansteuerleistung der Betätigungseinrichtung 21; diese muß im wesentlichen nur noch Reibkräfte, Strömungskräfte und Massenkräfte aufbringen, so daß sie insgesamt sehr niedrig gehalten werden kann.

Wird über die Betätigungseinrichtung 21 der Betätigungsstößel 43 von seiner Neutralstellung, die als geschlossene Mittelstellung ausgeführt ist, aus in Richtung zum Deckel 22 hin ausgelenkt, so legt sich dessen Betätigungfläche 47 gegen den Boden 36 des ersten Ventilkörpers 33 und öffnet diesen gegen die Kraft der Feder 41. Dabei hebt die ringförmige Dichtkante 39 von der ersten Sitzfläche 28 ab und Druckmittel kann von dem Zulaufanschluß 12 über die Zuströmöffnung 29 zum Motoranschluß 14 strömen und dort den Sekundärdruck erhöhen. Die Größe des aufgesteuerten Querschnitts läßt sich proportional zum Eingangssignal der Betätigungseinrichtung 21 steuern. Der Druckausgleich am ersten Ventilkörper 33 bleibt dabei erhalten. Der Betätigungsstößel 43 kann sich durch die lose Lagerung in der Bohrung 42' ungehindert axial bewegen, wobei das zweite Sitzventil 45 geschlossen bleibt. Beim Abschalten des Betätigungseinrichtung 21 wird das erste Sitzventil 44 durch die Kraft der Feder 41 wieder geschlossen.

In entsprechender Weise kann durch Auslenken des Betätigungsstößels 43 aus der gezeichneten Neutralstellung in die entgegengesetzte Richtung das zweite Sitzventil 45 geöffnet werden, so daß dessen Ventilkörper 34 die Verbindung vom Motoranschluß 14 über die Abströmöffnung 32 zum Entlüftungsanschluß 16 aufsteuert und somit sich der Sekundärdruck abbauen kann. Auch der zweite Ventilkörper 34 ist bei dieser Aussteuerung gegenüber beiden Druckseiten hin vollkommen druckentlastet, da der Sekundärdruck über den Längskanal 48 und die Querkanäle 49 stets auch in der zweiten Führungsbohrung 25 sich aufbauen kann. Die elektromagnetische Betätigungseinrichtung 21 ist als elektromechanischer Wandler ausgebildet, wie er zum Beispiel als Doppelhubmagnet bekannt ist. Dieser Doppelhubmagnet wird dabei in an sich bekannter Weise in druckdichter Bauweise ausgeführt, wobei sein Anker mit dem Sekundärdruck beaufschlagt wird. Der antreibende Anker des Wandlers ist mit dem Betätigungsstößel 43 so gekoppelt, daß letzterer aus seiner Neutralstellung nach beiden Richtungen betätigbar ist. Die Betätigungseinrichtung 21 ist dabei für eine proportionale Arbeitsweise ausgelegt.

Wie die Figur 1 besonders deutlich zeigt, ist das Steuerventil 10 mit seinen beiden Sitzventilen 44, 45 symmetrisch aufgebaut, so daß der Zulaufanschluß 12 für die Druckmittelversorgung und der Entlüftungsanschluß 16 gegeneinander austauschbar sind.

Die Figur 2 zeigt in stark vereinfachter Darstellung einen elektropneumatischen Druckregler 60, bei dem das Steuerventil 10 nach Figur 1 in einen elektronischen Druckregelkreis eingebunden ist. Bei dem Druckregler 60 wird der im Motoranschluß 14 herrschende Sekundärdruck von einem elektrofluidischen Drucksensor 61 erfaßt und als elektrisches Signal an eine elektronische Regeleinrichtung 62 eingeschleift. Diese Regeleinrichtung 62 vergleicht den Istwert des Drucksignals 63 mit einem vorgegebenen Sollwert 64 des Drucksignals und steuert über die Betätigungseinrichtung 21, die als ein elektromechanischer Wandler ausgebildet ist, das pneumatische Steuerventil 10 derart an, daß die Abweichung zwischen dem vorgegebenen Sollwert 64 und dem gemessenen Istwert 63 minimiert wird.

Das pneumatische Steuerventil 10 zeichnet somit sich dadurch aus, daß es eine allseitige Druckkompensation seiner Ventilglieder allein über eine Flächenauslegung erreicht, die keine zusätzlichen Begrenzungswände erfordert. Dabei ermöglicht das Steuerventil 10 einen äußerst einfachen und kompakten Aufbau und erlaubt damit eine kostengünstige Fertigung. Zudem ist das Steuerventil 10 vor allem durch seine identischen Ventilglieder und seinen symmetrischen Aufbau vielseitig einsetzbar und an unterschiedliche Anwendungsfälle anpaßbar. So kann das Steuerventil 10 auch mit einem einzigen Ventilglied betrieben werden, das zwischen einen Anschluß für Primärdruck und ein Anschluß für Sekundärdruck geschaltet wird, so daß ein Druckregler ohne Sekundärdruckentlüftung realisiert wird. Ein solcher Druckregler ist vor allem für Druckregelungen mit ständigem Luftverbrauch und für Durchflußsteuerungen einsetzbar.

Selbstverständlich sind an der gezeigten Ausführungsform Änderungen möglich. So kann es bei Bedarf auch zweckmäßig sein, die ringförmigen Dichtkanten im Gehäuse selbst anzuordnen und die Ventilkörper dagegen mit planen Gegensitzflächen auszurüsten. Anstelle der Kanäle im Betätigungsstößel 43 zur Weiterleitung des Sekundärdrucks in die Ausgleichskammern können auch Nuten vorgesehen werden, die am Außenumfang des Betätigungsstößels 43 angeordnet sind und einfacher herstellbar sind. Bei Bedarf kann die Kanalverbindung für die Weiterleitung des Sekundärdrucks auch in das Gehäuse verlegt werden. Das Steuerventil 10 läßt sich nicht nur bei Druckregelungen einsetzen, sondern kann auch vorteilhaft als einfaches Wegeventil verwendet werden oder zur Volumenstromsteuerung bei stetig arbeitenden Regelventilen Anwendung finden. Neben der gezeigten 3-Wege-Funktion kann das Steuerventil auch für eine 2-Wege-Funktion eingesetzt werden. Anstelle des beschriebenen Doppelhubmagneten läßt sich auch ein einfachwirkender Magnet mit Rückstellfeder verwenden. Als elektrofluidischer Drucksensor eignet sich besonders ein elektronischer Drucksensor. Durch den besonderen Druckausgleich können auch die Funktionen von Anschlüssen vertauscht werden.

## Patentansprüche

1. Pneumatisches Steuerventil (10) mit einem Ventilgehäuse (11), das einen Zulaufanschluß (12) zur Druckmittelzufuhr, einen Motoranschluß (14) zur Verbindung mit einem Verbraucher und einen Entlüftungsanschluß (16) aufweist, wobei der Motoranschluß (14) über eine Zuströmöffnung (29) mit dem Zulaufanschluß (12) und über eine Abströmöffnung (32) mit dem Entlüftungsanschluß (16) verbindbar ist und mit zwei zueinander koaxialen, jeweils einer der beiden Öffnungen zugeordneten und unabhängig voneinander bewegbaren Ventilkörpern (33, 34), die jeweils durch Federbeaufschlagung aufeinander zugerichtet in eine Schließstellung vorgespannt sind, in der sie die zugeordnete Zu- bzw. Abströmöffnung (29, 32) nach Art eines Sitzventils mit einer ringförmigen Dichtkante (39, 39') absperren und mit einem mittels einer Antriebseinrichtung (21) verstellbaren, beide Ventilkörper (33, 34) axial durchdringenden Betätigungsstößel (43) für beide Ventilkörper (33, 34), an dem axial entgegengesetzt gerichtete Betätigungsflächen (47, 47') vorgesehen sind, die bei entsprechender Verstellrichtung des Betätigungsstößels in Öffnungsrichtung entgegen der Federkraft auf jeweils einen der Ventilkörper einwirken, und bei dem die beiden durch die Ventilkörper axial hindurchdringenden Endabschnitte (51, 51') des Betätigungsstößels (43) in seitlichen Ausgleichskammern (52, 53) liegen, die über Ausgleichskanäle mit dem Druck im Motoranschluß (14) beaufschlagt sind, wobei beide Ventilkörper (33, 34) untereinander gleich ausgebildet sind und jeder Ventilkörper (33, 34) gegenüber den Drücken in seinen beiden zugeordneten Anschlüssen (12, 14 bzw. 14, 16) druckkompensiert ausgeführt ist, **dadurch gekennzeichnet, daß** in den Ausgleichskammern (52, 53) beide Endabschnitte (51, 51') frei enden und zur Erzielung einer druckkompensierten Bauweise stirnseitig vom Druck im Motoranschluß (14) beaufschlagt sind.

2. Steuerventil nach Anspruch 1, **dadurch gekennzeichnet, daß** die Ventilkörper (33, 34) jeweils einen hülsenförmigen Führungsabschnitt (35, 35') aufweisen, an denen für eine Druckkompensation gleich große wirksame Druckflächen durch eine stirnseitig wirksame ringförmige Dichtkante (39, 39') und durch einen den Außenumfang des Führungsabschnitts (35, 25') umspannenden Dichtring (38, 38') gebildet werden, wobei der Dichtring vorzugsweise im Gehäuse (11) angeordnet ist.

3. Steuerventil nach Anspruch 2, **dadurch gekennzeichnet, daß** die ringförmige Dichtkante (39, 39') am Ventilkörper (33, 34) angeordnet ist.

4. Steuerventil nach Anspruch 3, **dadurch gekennzeichnet, daß** die äußere Mantelfläche (37) des Führungsabschnitts (35) in der ringförmigen Dichtkante (39) endet und dadurch den gleichen Durchmesser aufweist.

5. Steuerventil nach einem oder mehreren der Ansprüche 1 bis 4, **dadurch gekennzeichnet, daß** die Ventilkörper (33, 34) jeweils einen becherförmigen Querschnitt aufweisen, dessen Boden (36) vom Betätigungsstößel (43) durchdrungen ist.

6. Steuerventil nach einem oder mehreren der Ansprüche 1 bis 5, **dadurch gekennzeichnet, daß** der Betätigungsstößel (43) axial beweglich in den Ventilkörpern (33, 34) gelagert ist, die ihrerseits im Gehäuse (11) axial gleitend geführt sind.

7. Steuerventil nach einem der Ansprüche 1 bis 6, **dadurch gekennzeichnet, daß** an jedem Ventilkörper (33, 34) die ihn belastende Feder (41, 41') in der zugeordneten Ausgleichskammer (52, 53) angeordnet ist.

8. Steuerventil nach einem der Ansprüche 1 bis 6, **dadurch gekennzeichnet, daß** die Ausgleichskanäle (48, 49) in bzw. am Betätigungsstößel (43) angeordnet sind.

9. Steuerventil nach einem oder mehreren der Ansprüche 1 bis 8, **dadurch gekennzeichnet, daß** das Gehäuse (11) des Steuerventils (10) eine durchgehende Längsbohrung (17) aufweist, die durch einen mittleren, dem Motoranschluß (14) zugeordeten Bohrungsabschnitt (23) mit kleinerem Durchmesser in zwei gleiche, sacklochartige Führungsbohrungen (24, 25) geteilt ist, die mit dem Zulaufanschluß (12) bzw. dem Entlüftungsanschluß (16) verbunden sind und in denen die Ventilkörper (33, 34) axial beweglich geführt sind und mit ihren innenliegenden, stirnseitigen Enden die Dichtstelle der ringförmigen Dichtkante (39, 39') bilden, um die Zuström- (29) bzw. Abströmöffnung (32) zu steuern.

10. Steuerventil nach einem der Ansprüche 1 bis 9, **dadurch gekennzeichnet, daß** der Betätigungsstößel (43) einen zwischen beiden Ventilkörpern (33, 34) liegenden Kolbenabschnitt (46) mit größerem Durchmesser aufweist, an dem die zwei den Ventilkörpern (33, 34) jeweils zugewandten Betätigungsflächen (47) angeordnet sind und dessen Länge so groß gewählt ist, daß beide Ventilkörper (33, 34) gleichzeitig ihre Schließstellung einnehmen können.

11. Steuerventil nach Anspruch 5, **dadurch gekennzeichnet, daß** jeder becherförmige Ventilkörper (33, 34) die ihn belastende Feder (41, 41') zumindest teilweise aufnimmt, wobei sich die jeweils im Gehäuse (11) abstützende Feder (41, 41') mit ihrem anderen Ende am Boden (36, 36') des Ventilkörpers (33, 34) abstützt.

12. Steuerventil nach Anspruch 11, **dadurch gekennzeichnet, daß** die Feder (41) den Betätigungsstößel (43) umringt.

13. Steuerventil nach einem der Ansprüche 1 bis 12, **dadurch gekennzeichnet, daß** am Gehäuse (11) zur axialen Auslenkung des Betätigungsstößels (43) eine elektromagnetische Betätigungseinrichtung (21) angeordnet ist, die insbesondere als ein Doppelhub-Elektromagnet ausgebildet ist.

14. Steuerventil nach Anspruch 13, **dadurch gekennzeichnet, daß** die Betätigungseinrichtung einen druckdichten Magneten aufweist, dessen als Antriebselement dienender Anker vom Sekundärdruck beaufschlagt wird.

15. Steuerventil nach einem oder mehreren der Ansprüche 1 bis 14, **dadurch gekennzeichnet, daß** das Ventil (10) ein Teil eines elektropneumatischen Druckreglers (60) ist, bei dem der Druck im Motoranschluß (14) von einem elektropneumatischen Drucksensor (61) erfaßt und in einem elektronischen Druckregelkreis ausgeregelt wird.

## Claims

1. A pneumatic control valve (10) with a valve housing (11), having an input port (12) for pressure medium input, a motor port (14) for connection with a load, and a venting port (16), wherein the motor port (14) is connectable with said input port (12) via an input opening (29) and to said venting port (16) via an output opening (32), and with two valve bodies (33, 34), coaxially arranged relative to each other and each associated with one of the two openings and independently moveable and each biased by a spring load toward each other in a closed position in which they block the associated input and output openings (29, 32) in the manner of a seat valve with an annular sealing edge (39, 39'), and provided with an actuating rod (43) for the two valve bodies (33, 34) adjustable by a driving means (21) and axially extending through both valve bodies (33, 34) and on which, facing in opposite directions, actuating surfaces (47, 47') are provided, which in the respective adjusting directions of the actuating rod act on each valve body individually in the opening direction and counteracting the spring force, and wherein the two end sections (51, 51') of the actuating rod (43) axially extending through the valve bodies are situated in lateral equalization chambers (52, 53), to which the pressure in the motor port (14) is applied via equalization channels, wherein the two valve bodies (33, 34) are shaped identical to each other and each valve body (33, 34) is configured to be pressure compensated with respect to pressures in its two associated ports (12, 14 or 14,16), **characterized in that** in the equalization chambers (52, 53) the two end sections (51, 51') have free ends and have a pressure applied to their end faces from the pressure in said motor port (14) to create a pressure-compensated structure.

2. The control valve according to claim 1, **characterized in that** the valve bodies (33, 34) each have a sleeve-shaped guiding section (35, 35') on which effective pressure surfaces with equal surface areas are formed for pressure compensation by an annular sealing edge (39, 39') effective on the end face and by a sealing ring (38, 38') extending around the circumference of said guiding section (35, 35'), wherein the sealing ring is preferably arranged in said housing (11).

3. The control valve according to claim 2, **characterized in that** the annular sealing edge (39, 39') is arranged on said valve body (33, 34).

4. The control valve according to claim 3, **characterized in that** the exterior lateral surface (37) of said guiding section (35) ends in said annular sealing edge (39) and therefore has the same diameter.

5. The control valve according to one or more of claims 1 to 4, **characterized in that** said valve bodies (33, 34) each have a cup-shaped cross-section, through a bottom (36) of which said actuating rod (43) extends.

6. The control valve according to one or more of claims 1 to 5, **characterized in that** said actuating rod (43) is supported so as to be axially moveable in said valve bodies (33, 34) which in turn are axially guided in said housing (11) in a sliding fit.

7. The control valve according to any one of claims 1 to 6, **characterized in that** on each valve body (33, 34) the spring (41, 41') which is loading it is arranged in the associated equalization chamber (52, 53).

8. The control valve according to any one of claims 1 to 6, **characterized in that** said equalization channels (48, 49) are arranged in or on said actuating rod (43).

9. The control valve according to one or more of claims 1 to 8, **characterized in that** said housing (11) of said control valve (10) has an uninterrupted longitudinal bore (17) which is divided into two equal blind-hole-shaped guiding bores (24, 25) by a central bore section (23) associated with said motor port (14) and having a smaller diameter, the guiding bores (24, 25) being connected with said input opening (12) and said output opening (16), respectively, and in which said valve bodies (33, 34) are guided to be axially moveable and form the sealing point of the annular sealing edge (39, 39') with their interior end faces in order to control said input (29) and output (32) openings, respectively.

10. The control valve according to any one of claims 1 to 9, **characterized in that** said actuating rod (43) - between said two valve bodies (33, 34) - has a piston section (46) with a larger diameter on which are arranged said actuating surfaces (47), each facing one of said valve bodies (33, 34), and the length of which is chosen such that the two valve bodies (33, 34) can be in closed positions at the same time.

11. The control valve according to claim 5, **characterized in that** each cup-shaped valve body (33, 34) at least partially receives the spring (41, 41') loading it, wherein each spring (41, 41') supported in said housing (11) is supported at its other end on the bottom (36, 36') of said valve body (33, 34).

12. The control valve according to claim 11, **characterized in that** said spring (41) surrounds said actuating rod (43).

13. The control valve according to any one of claims 1 to 12, **characterized in that** for axially displacing said actuating rod (43) an electromagnetic actuating means (21) is arranged at said housing, which is configured as a double-stroke electromagnet, in particular.

14. The control valve according to claim 13, **characterized in that** said actuating means comprises a pressure-tight magnet whose armature, which serves as a driving element, has the secondary pressure applied to it.

15. The control valve according to one or more of claims 1 to 14, **characterized in that** said valve (10) is a part of an electro-pneumatic pressure regulator (60) in which the pressure in said motor port (14) is detected by an electro-pneumatic pressure sensor (61) and is compensated in an electronic pressure regulating circuit.

## Revendications

1. Soupape de commande (10) pneumatique
comportant un boîtier de soupape (11) qui présente un raccord d'amenée (12) pour l'amenée d'un agent sous pression, un raccord de moteur (14) pour effectuer une liaison avec un appareil consommateur et un raccord de mise à l'air (16),
le raccord moteur (14) pouvant être relié via une ouverture d'admission (29) au raccord d'amenée (12) et via une ouverture de sortie (32) au raccord de mise à l'air (16), et comportant deux corps de soupape (33, 34) coaxiaux l'un par rapport à l'autre, associés chacun à une des deux ouvertures et déplaçables indépendamment l'un de l'autre,
lesquels sont chacun orientés l'un vers l'autre et précontraints par sollicitation élastique dans une position de fermeture
dans laquelle ils bloquent l'ouverture d'admission (29) et l'ouverture de sortie (32) respective associée à la manière d'un siège de soupape avec une arête d'étanchéité (39, 39') annulaire,
et comportant un poussoir d'actionnement (43) pour les deux corps de soupape (33, 34), réglable au moyen d'un système d'entraînement (21) et traversant axialement les deux corps de soupape (33, 34),
poussoir d'actionnement sur lequel sont prévues des surfaces d'actionnement (47, 47') orientées axialement à l'opposé l'une de l'autre, qui en cas de direction de réglage correspondante du poussoir d'actionnement, agissent en direction d'ouverture à l'encontre de la force de ressort sur un des corps de soupape, et dans lequel les deux tronçons d'extrémité (51, 51') du poussoir d'actionnement (43), qui traversent axialement les corps de soupape, sont situés dans des chambres de compensation (52, 53) latérales qui sont alimentées en pression dans le raccord de moteur (14) via des canaux de compensation,
les deux corps de soupape (33, 34) étant réalisés identiques l'un à l'autre, et chaque corps de soupape (33, 34) étant réalisé avec compensation de pression par rapport aux pressions régnant dans ses deux raccords associés (12, 14 et 14, 16),
**caractérisée en ce que** dans les chambres de compensation (52, 53), les deux tronçons d'extrémité se terminent librement et sont sollicités frontalement par la pression dans le raccord de moteur (14) pour obtenir une structure compensée en pression.

2. Soupape de commande selon la revendication 1, **caractérisée en ce que** les corps de soupape (33, 34) présentent chacun un tronçon de guidage (35, 35') en forme de douille sur lesquels, pour obtenir une compensation de pression, des surfaces de pression actives de même taille sont formées par une arête d'étanchéité (39, 39') annulaire active côté frontal et par une bague d'étanchéité (38, 38') serrant la périphérie extérieure du tronçon de guidage (35, 35'), la bague d'étanchéité étant agencée de préférence dans le boîtier (11).

3. Soupape de commande selon la revendication 2, **caractérisée en ce que** l'arête d'étanchéité (39, 39') annulaire est agencée sur le corps de soupape (33, 34).

4. Soupape de commande selon la revendication 3, **caractérisée en ce que** la surface enveloppe extérieure (37) du tronçon de guidage (35) se termine dans l'arête d'étanchéité (39) annulaire et présente ainsi le même diamètre.

5. Soupape de commande selon l'une ou plusieurs des revendications 1 à 4, **caractérisée en ce que** les corps de soupape (33, 34) présentent chacun une section transversale en forme de godet, dont le fond (36) est traversé par le poussoir d'actionnement (43).

6. Soupape de commande selon l'une ou plusieurs des revendications 1 à 5, **caractérisée en ce que** le poussoir d'actionnement (43) est monté axialement mobile dans les corps de soupape (33, 34) qui sont, pour leur part, guidés à coulissement axial dans le boîtier (11).

7. Soupape de commande selon l'une des revendications 1 à 6, **caractérisée en ce que** sur chaque corps de soupape (33, 34), le ressort (41, 41') qui le sollicite est agencé dans la chambre de compensation (52, 53) associée.

8. Soupape de commande selon l'une des revendications 1 à 6, **caractérisée en ce que** les canaux de compensation (48, 49) sont agencés dans ou sur le poussoir d'actionnement (43), respectivement.

9. Soupape de commande selon l'une ou plusieurs des revendications 1 à 8, **caractérisée en ce que** le boîtier (11) de la soupape de commande (10) présente un perçage longitudinal (17) continu qui est divisé par un tronçon de perçage (23) médian de plus petit diamètre et associé au raccord de moteur (14), en deux perçages de guidage (24, 25) identiques en forme de trous borgnes qui sont reliés au raccord d'amenée (12) et au raccord de mise à l'air (16), respectivement et dans lesquels les corps de soupape (33, 34) sont guidés axialement mobiles et qui forment avec leurs extrémités frontales situées à l'intérieur l'emplacement d'étanchéité de l'arête d'étanchéité (39, 39') annulaire pour commander l'ouverture d'admission (29) et l'ouverture de sortie (32), respectivement.

10. Soupape de commande selon l'une des revendications 1 à 9, **caractérisée en ce que** le poussoir d'actionnement (43) présente un tronçon de piston (46) de plus grand diamètre et situé entre les deux corps de soupape (33, 34), sur lequel sont agencées les deux surfaces d'actionnement (47) tournées chacune vers les corps de soupape (33, 34) et dont la longueur est choisie telle que les deux corps de soupape (33, 34) peuvent simultanément occuper leur position de fermeture.

11. Soupape de commande selon la revendication 5, **caractérisée en ce que** chaque corps de soupape (33, 34) en forme de godet reçoit au moins partiellement le ressort (41, 41') qui le sollicite, chaque ressort (41, 41'), qui prend appui dans le boîtier (11), prenant appui avec son autre extrémité sur le fond (36, 36') du corps de soupape (33, 34).

12. Soupape de commande selon la revendication 11, **caractérisée en ce que** le ressort (41) entoure le poussoir d'actionnement (43).

13. Soupape de commande selon l'une des revendications 1 à 12, **caractérisée en ce que** pour dévier axialement le poussoir d'actionnement (43), un système d'actionnement (21) électromagnétique, qui est réalisé en particulier sous forme d'électroaimant à double course, est agencé sur le boîtier (11).

14. Soupape de commande selon la revendication 13, **caractérisée en ce que** le système d'actionnement présente un aimant étanche à la pression dont l'armature servant d'élément d'entraînement est sollicitée par une pression secondaire.

15. Soupape de commande selon l'une ou plusieurs des revendications 1 à 14, **caractérisée en ce que** la soupape (10) est une partie d'un régulateur de pression (60) électropneumatique dans lequel la pression dans le raccord de moteur (14) est saisie par un capteur de pression (6 1 ) électropneumatique et est asservie dans un circuit de réglage de pression électronique.
